(19) Europäisches Patentamt / European Patent Office / Office européen des brevets

(11) **EP 4 456 364 A1**

(12) **EUROPÄISCHE PATENTANMELDUNG**

(43) Veröffentlichungstag:
**30.10.2024 Patentblatt 2024/44**

(21) Anmeldenummer: 23170662.3

(22) Anmeldetag: **28.04.2023**

(51) Internationale Patentklassifikation (IPC):
**H02J 3/00** *(2006.01)*

(52) Gemeinsame Patentklassifikation (CPC):
**H02J 3/00;** H02J 2203/20

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **MESANOVIC, Amer**
**80997 München (DE)**

• **SZABO, Andrei**
**85521 Ottobrunn (DE)**
• **WELLHÖFER, Anatoli**
**91611 Lehrberg (DE)**
• **HEYDE, Chris Oliver**
**91058 Erlangen (DE)**
• **MUENZ, Ulrich**
**Princeton 08540 (US)**

(74) Vertreter: **Siemens Patent Attorneys**
**Postfach 22 16 34**
**80506 München (DE)**

(54) **COMPUTERIMPLEMENTIERTES VERFAHREN FÜR EINE BESTIMMUNG EINER NETZSTABILITÄT EINES ELEKTRISCHEN ENERGIENETZES, ANORDNUNG UND COMPUTERPROGRAMMPRODUKT**

(57) Gegenstand der vorliegenden Erfindung ist ein Computerimplementiertes Verfahren für eine Bestimmung einer Netzstabilität eines elektrischen Energienetzes, gekennzeichnet durch die Schritte:

Empfangen eines Datensatzes mit Parametern für Bestandteile eines elektrischen Energienetzes mittels einer Kommunikationseinrichtung, und

Erzeugen eines electromagnetic transient Modells anhand der Parameter mittels einer Modellerzeugungseinrichtung, gekennzeichnet durch die Schritte:

Durchführen einer Simulation anhand des Modells mittels einer Simulationseinrichtung, wobei

eine Modellreduktion durchgeführt wird, indem Zustände, deren Einfluss auf das Simulationsergebnis unterhalb eines ersten Einflussschwellenwertes liegt und/oder Zustände, die durch eine Veränderung der Parameter weniger als ein zweiter Einflussschwellenwert beeinflusst sind, nicht vollständig berechnet werden.

Ferner sind Gegenstände der Erfindung eine entsprechende Anordnung und ein entsprechendes Computerprogrammprodukt.

FIG 1

EP 4 456 364 A1

**Beschreibung**

Die Erfindung betrifft ein computerimplementiertes Verfahren für eine Bestimmung einer Netzstabilität eines elektrischen Energienetzes gemäß dem Oberbegriff des Anspruchs 1, eine Anordnung gemäß dem Oberbegriff des Anspruchs 8 und ein Computerprogrammprodukt gemäß Anspruch 15.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permananter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leitstelle übermittelt. Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "intelligent electronic devices" (IEDs) empfangen und verarbeitet, um die Leistungsschalter und die Trennschalter usw. anzusteuern. In der Leitstelle ist bisher häufig ein lokales Rechenzentrum vorgesehen, auf dem die Leitstellensoftware wie z.B. "Sprectrum Power" läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leitstellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Auch eine teilweise oder vollständige Ausbildung der RechnerAnordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten, lokale Vorhersagen für einen Energieverbrauch und eine Energieerzeugung sowie dynamische Topologie-Informationen (d.h. welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmangement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-1-4244-7398-4 und "Real-Time Estimation of Loads in Radial and Unsymmetrical Three-Phase Distribution Networks" von Dzafic et al., 2013 IEE 0885-8950, bekannt.

Die Durchführung von Stabilitätssimulationen ist eine wichtige Aufgabe von Anlagenbetreibern, die einen zuverlässigen Anlagenbetrieb unter verschiedenen Betriebsbedingungen gewährleistet. Diese Aufgabe wird traditionell mit der sogenannten "Root-Mean-Square" (RMS) oder Stabilitätssimulation durchgeführt, die das Stromnetz, also Netzelemente wie Stromleitungen, Kabel und Transformatoren, mit algebraischen Gleichungen modelliert. Jedoch enthalten Modelle von z.B. Generatoren auch noch dynamische Zustände. Diese Näherung ohne Betrachtung der Dynamik ist für Systeme mit ausreichender konventioneller Erzeugung (große Synchrongeneratoren, die Gas-, Kohle- oder Kernkraftwerke verbinden) ausreichend genau.

Der steigende Anteil wechselrichterbasierter Ressourcen ("inverter-based Resources" (IBRs)) in Energiesystemen wie z.B. Photovoltaikanlagen und Winderkraftanlagen macht "elektromagnetische transiente Simulationsmodelle" ("electromagnetic transient" (EMT)) für die genaue Simulation dynamischer Phänomene in solchen Systemen erforderlich, weil solche Anlagen i.d.R. viel schneller nachgeregelt werden als konventionelle Energieerzeuger. Es ergeben sind damit dynamische Prozesse, die in der Zeitskala der in den Leitungen des Energienetzes auftretenden Änderungen von Kapazitäten und Induktivitäten liegen.

EMT-Modelle berücksichtigen im Gegensatz zu RMS-Modellen die Dynamik von Netzelementen und enthalten in der Regel detailliertere und genauere Modelle von IBRs. Im Vergleich zur RMS-Simulation benötigen EMT-Simulationen für die Berechnung der Stabilität jedoch aufgrund der höheren Anzahl von Zustandsgleichungen und erweiterten Modellen um Größenordnungen mehr Zeit für die Simulation. Sie erfordern außerdem kleinere Zeitschritte und die Handhabung von Diskontinuitäten.

Ein bekanntes Softwareprodukt für RMS- und EMT-Simulationen ist z.B. PSS-SINCAL, bekannt aus der Broschüre "PSS®SINCAL Plan reliable distribution networks with precision and speed" der Siemens AG. Ferner ist für RMS-Simulationen das Softwareprodukt PSS-E aus der Broschüre "Dynamic Simulation PSS®E", Siemens AG 2014, bekannt.

Das Problem der Netzstabilität unter dem Einfluss von immer mehr erneuerbaren Energieressourcen, die per IBR einspeisen, wird in der Veröffentlichung "Understanding Small-Signal Stability of Low-Inertia Systems" von Markovic et al., IEEE Transactions on Power Systems, Vol. 36, No. 5, September 2021, behandelt.

EMT-basierte Software für Stabilitätssimulationen wird derzeit hauptsächlich für Anlagenzertifizierungsprozesse, Zusammenschaltungsanfragen von großen IBRs oder starker Dominanz von IBRs im Netz eingesetzt. Beispiele sind die die Systeme von Australien, Hawaii, Texas, Großbritannien und Irland. In diesen Fällen müssen lange Rechenzeiten in Kauf genommen werden. Die langen Simulationszeiten von EMT-Modellen wurden bisher teilweise durch manuelle Reduktion des Modells reduziert, z.B. durch manuelle Reduzierung der Anzahl der Generatoren und Stromleitungen oder durch eine Netzreduktion vor dem Ausführen der Simulation. Dies beruht jedoch auf Heuristiken und die Genauigkeit der Näherung ist nicht garantiert.

Ausgehend von bekannten Verfahren für eine Analyse von Netzwerkinformationen stellt sich an die Erfindung die Aufgabe, ein Verfahren anzugeben, mit dem vergleichsweise einfach, schnell und zuverlässig EMT-Simulation ausführbar sind.

Die Erfindung löst diese Aufgabe durch ein Computerimplementiertes Verfahren gemäß Anspruch 1.

Die Verwendung der Erfindung ermöglicht potenzielle Einsparungen um den Faktor 3 in Bezug auf die benötigte Rechenzeit im Vergleich zur bisherigen Verwendung von EMT-Simulationen. Dies reduziert die Bearbeitungszeit für verschiedene Studien und erhöht den Durchsatz von Studien. Für Stabilitätssimulationen im laufenden Betrieb eingesetzt, ermöglicht das vorgeschlagene Verfahren potenziell eine schnellere Simulation und reduziert damit die Reaktionszeit auf Störungen, was die Systemsicherheit erhöht.

Die Erfindung kann mit Vorteil bei elektrischen Energieversorgungsnetzen (Mittelspannung oder Niederspannung) oder Energietransportnetzen (Hochspannung) eingesetzt werden Ein Mittelspannungsnetz weist beispielsweise eine Nennspannung von 1 kV bis 52 kV auf. Ein Niederspannungsnetz weist beispielsweise eine Nennspannung von höchstens 1 kV auf. Ein Hochspannungsnetz weist beispielsweise eine Nennspannung von mehr als 20 kV auf.

Eine Kommunikationseinrichtung ist z.B. für eine Datenkommunikation nach dem TCP/IP Protocol, einem anderen üblichen Internetkommunikationsprotokoll oder dem Kommunikationsstandard IEC 61850 ausgebildet.

Eine Einrichtung im Sinne der Erfindung weist z.B. Prozessoren, Prozessorkerne, GPUs, Datenspeicher und ggf. eine Ausgabeeinrichtung wie einen Bildschirm auf. Auch eine teilweise oder vollständige Ausbildung der Einrichtung als Software ist möglich. Auch der Einsatz einer Cloud-Applikation, also einer Softwarekomponente zur Ausführung auf einer Serveranordnung mit dezentral verteilten Ressourcen zur Datenverarbeitung und Datenspeicherung, die über ein Datennetzwerk wie z.B. das Internet verbunden sind, kann vorgesehen werden.

Typischerweise schätzt ein Netzbetreiber in regelmäßigen Abständen den Ist-Zustand seiner Anlagen anhand von Messungen aus dem realen Energienetz ab. Das Ergebnis der Schätzung wird verwendet, um das Modell des Systems zu aktualisieren, z.B. auf den aktuellen Erzeugungsmix aus konventioneller und erneuerbarer Erzeugung.

Anschließend werden verschiedene Eventualitäten und Szenarien mit einer Software wie dem eingangs erwähnten Siguard DSA simuliert. Anhand der Ergebnisse der Simulation können vorbeugende Maßnahmen, wie z. B. Sollwertänderungen, ergriffen werden, um den sicheren Betrieb der Anlage aufrechtzuerhalten.

Bevorzugt kann eine Vereinfachung des EMT-Modells, beispielsweise in Form einer Linearisierung, durchgeführt werden. Diese Linearisierung kann beispielsweise in jedem Simulationsschritt durchgeführt werden. Alternativ kann die Linearisierung nur in denjenigen Simulationsschritten durchgeführt werden, bei denen eine Einflussbedingung nicht erfüllt ist. Die Einflussbedingung kann als $\|x_r - x_{k-1}\| < \Delta_x$ oder $\|u_r - u_{k-1}\| < \Delta_u$ definiert sein (Definitionen und Details werden im Rahmen der unten weiter ausgeführten Figurenbeschreibungen erläutert).

Ein Theorem für eine Modellreduktion ist aus dem Buch "Essentials of robust control", insbesondere dem Theorem 7.11, Kemin, and John Comstock Doyle, Vol. 104, Upper Saddle River, NJ: Prentice hall, 1998, bekannt.

Der erste und der zweite Einflussschwellenwert können beispielsweise vorher festgelegt sein, z.B. basierend auf vorher durchgeführten Simulationen.

Die Erfindung trägt dazu bei, die erforderliche Rechenzeit und den Aufwand zu reduzieren, um diesen Regelkreis zu vervollständigen. Dies ermöglicht schnellere Regelkreise (oder mehr Simulationsszenarien), wenn die Simulation im laufenden Betrieb durchgeführt wird. Wenn die Simulation offline durchgeführt wird, ermöglicht der vorgeschlagene Ansatz, dass mehr Simulationsstudien durchgeführt werden können, und ermöglicht den Einsatz weniger leistungsfähiger Computerhardware, was die Kosten senkt. Das erfindungsgemäße Verfahren kann auch während Offline-Planungsstudien und nicht nur für In-the-Loop-Simulationen verwendet werden.

Es ist ein wesentlicher Aspekt der Erfindung, dass die EMT-Simulationen beschleunigt werden. Dies wird erreicht, in dem automatisiert diejenigen Berechnungsschritte nicht ausgeführt werden, die das Berechnungsergebnis der EMT-Simulation kaum beeinflussen. Beispielsweise wird jeder Berechnungsschritt begonnen und parallel dazu mittels des erfindungsgemäßen Ansatzes bestimmt, ob dieser Berechnungsschritt einen wesentlichen Einfluss auf das Ergebnis haben würde. Ist dies der Fall, wird der Berechnungsschritt vollständig ausgeführt und zum nächsten Schritt übergeleitet. Ist dies nicht der Fall, wird der Berechnungsschritt abgebrochen und direkt zum nächsten Berechnungsschritt übergegangen.

In einer bevorzugten Ausführungsform des erfindungsgemäßen computerimplementierten Verfahrens werden für die Modellreduktion die Steuerbarkeits-Gram'sche-Matrix und/oder die Beobachtbarkeits-Gram'sche-Matrix berücksichtigt. Dieser mathematische Ansatz ist beispielsweise bekannt von der Website mathworks (Link: https://de.mathworks.com/help/control/ref/statespacemodel.gra m.html;jsessionid=d350a4c8abb765ae7e2c8f3dfd66) .

In einer weiteren bevorzugten Ausführungsform des erfindungsgemäßen computerimplementierten Verfahrens werden für die Modellreduktion Hankel-Singularwerte berücksichtigt. Dieser mathematische Ansatz ist beispielsweise bekannt von der Website mathworks (Link: https://de.mathworks.com/help/robust/gs/hankel-singular-values.html) .

In einer weiteren bevorzugten Ausführungsform des erfindungsgemäßen computerimplementierten Verfahrens wird für jeden Simulationsschritt die Modellreduktion gleichzeitig mit der Simulation begonnen, wobei die Simulation für den jeweiligen Simulationsschritt abgebrochen wird, sobald ein Zustand als nicht vollständig zu berechnen erkannt wird.

In einer weiteren bevorzugten Ausführungsform des erfindungsgemäßen computerimplementierten Verfahrens wird für die Bestandteile mindestens eines der folgenden Bestandteile verwendet: Leitung (6), Kabel, Transformator, Schalteinrichtung, Generator (9,11,12), Last (7,8,10), flexible alternating current transmission system (FACTS).

In einer weiteren bevorzugten Ausführungsform des erfindungsgemäßen computerimplementierten Verfahrens wird das Ergebnis der Simulation mittels einer Stabilitätseinrichtung für eine Stabilitätsanalyse des Energienetzes verwendet.

In einer weiteren bevorzugten Ausführungsform des erfindungsgemäßen computerimplementierten Verfahrens werden anhand der Stabilitätsanalyse mittels einer Netzleiteinrichtung Gegenmaßnahmen für eine Stabilisierung des Netzzustands ermittelt und als Steuerbefehle an steuerbare Betriebsmittel im Energienetz übermittelt.

Ausgehend von bekannten Anordnungen für eine Bestimmung einer Netzstabilität eines elektrischen Energienetzes stellt sich an die Erfindung die Aufgabe, eine Anordnung anzugeben, mit der vergleichsweise einfach, schnell und zuverlässig EMT-Simulationen ausführbar sind.

Die Erfindung löst diese Aufgabe durch eine Anordnung nach Anspruch 8. Eine bevorzugte Ausführungsform ist im Anspruch 9 bis 14 beschrieben. Es ergeben sich sinngemäß die gleichen Vorteile wie eingangs für das erfindungsgemäße Verfahren erläutert.

Ausgehend von bekannten Computerprogrammprodukten für eine Analyse von Netzwerkinformationen stellt sich ferner an die Erfindung die Aufgabe, ein Computerprogrammprodukt anzugeben, mit dem vergleichsweise einfach, schnell und zuverlässig EMT-Simulationen ausführbar sind.

Die Erfindung löst diese Aufgabe durch ein Computerprogrammprodukt nach Anspruch 15. Es ergeben sich sinngemäß die gleichen Vorteile wie eingangs für das erfindungsgemäße Verfahren erläutert.

Im Folgenden wird ein bevorzugtes Ausführungsbeispiel der Erfindung anhand der Figuren erläutert.

Figur 1    eine Übersicht der Erfindung, und

Figur 2    ein Beispiel eines erfindungsgemäßen Verfahrens, und

Figur 3    ein Beispiel für ein Ergebnis einer erfindungsgemäßen EMT-Simulation.

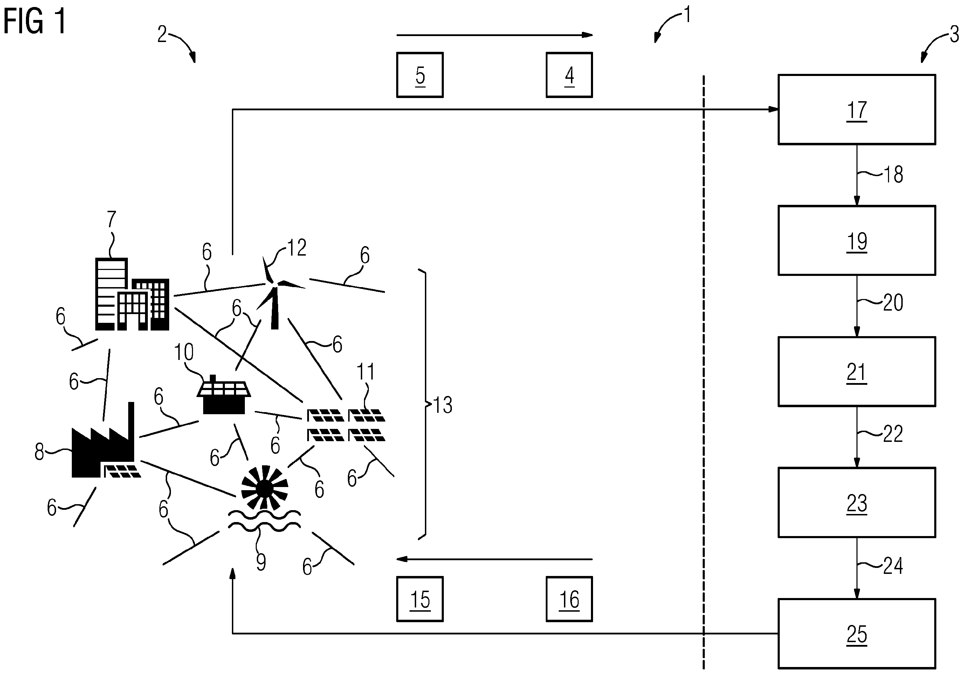

Die Figur 1 zeigt eine Übersicht 1 der Erfindung. Dabei ist auf der linken Seite der Abbildung ein Energienetz 2 abgebildet und auf der rechten Seite der Abbildung ein erfindungsgemäßes Verfahren 3, dass bei einem Energienetzbetreiber ausgeführt wird.

Im Energienetz sind beispielsweise Energieerzeuger wie Photovoltaikanlagen 11, Windkraftanlagen 12 und Wasserkraftwerke 9 vorhanden. Diese sind im Energienetz über Leitungen 6 mit Energieverbrauchern wie Einfamilienhäusern 10, Fabriken 8 und Bürogebäuden 7 verbunden. Die genannten Erzeuger und Verbraucher elektrischer Energie bilden zusammen mit dem Leitungen 6 ein elektrisches Energienetz 13. Im Energienetz 13 sind Sensoren und Betriebsmittel wie Schalteinrichtungen vorgesehen (nicht dargestellt), die Messwerte 4 und Statussignale 5 (z.B. Schalterstellung offen/geschlossen) an das erfindungsgemäße Verfahren übermitteln.

Gemäß dem erfindungsgemäßen Verfahren wird im Schritt 17 ein Netzzustand geschätzt. Der Netzzustand weist Spannungswerte an den Knoten im elektrischen Energienetz, Schalterstellungen und Energieerzeugungswerte auf. In regelmäßigen Abständen schätzt der Anlagenbetreiber den Ist-Zustand der Anlage anhand von Messungen aus der Anlage ab. Erfindungsgemäß werden Parameter (z.B. Spannungen, Schalterstellung offen/geschlossen, eingespeiste Leistung) aller Komponenten in den Energiesystemen erfasst:

- Parameter aller Generatoren und Lasten für EMT-Modelle,
- Parameter von Netzwerkelementen wie Kabeln, Stromleitungen, Transformatoren

- Parameter von flexiblen Wechselstromübertragungssystemen (FACTS) usw.

Die Parameter werden per Datenkommunikationsverbindung 18 bereitgestellt.

Das Ergebnis der Schätzung wird verwendet, um das Modell des Systems zu aktualisieren, z. B. auf den aktuellen Erzeugungsmix aus konventioneller und erneuerbarer Erzeugung. Dieser erste Schritt kann in der Praxis komplex sein, ist jedoch in der Technik bekannt.

Im nächsten Schritt 19 wird ein Modell des elektrischen Energienetzes erzeugt. Diese stellt per Datenkommunikationsverbindung 20 Modellparameter für den nächsten Schritt 21 zur Verfügung.

Im Schritt 21 wird ein mathematisches EMT-Modell definiert, das per Datenkommunikationsverbindung 22 übergeben wird. Im Schritt 23, was Kern der vorliegenden Erfindung ist, wird bei der Ausführung der EMT-Simulation mittels eines automatisierten Verfahrens eine Entscheidung darüber getroffen, welche Schritte der EMT-Simulation durchgeführt werden und welche Schritte eingespart werden können.

Das Ergebnis wird per Datenkommunikationsverbindung 24 im Schritt 25 empfangen und für eine weitergehende Auswertung bereitgestellt. Beispielsweise können Stabilitätsprobleme im elektrischen Energieversorgungsnetz 13 erkannt werden, weil z. B. die vorgesehene Nennfrequenz nicht eingehalten wird. Anhand dieser Erkenntnisse können beispielsweise Gegenmaßnahmen automatisiert oder teilautomatisiert durchgeführt werden. Es werden beispielsweise per Datenkommunikationsverbindung präventive Gegenmaßnahmen wie die Änderungen von Schalterstellungen 15 oder Veränderungen der Stufenstellung für steuerbare Ortsnetztransformatoren 16 als Steuerbefehle an steuerbare Betriebsmittel im Energienetz 13 übermittelt.

Im Folgenden wird auf die Schritte 21 und 23 näher eingegangen. Nachdem die Parameter des Modells aktualisiert wurden, wird das mathematische Modell des Systems wie folgt formuliert:

$$\dot{x} = f(x,u), \quad y = g(x,u)$$

Dabei bezeichnet x den Vektor aller dynamischen Zustände des Potenzsystems, u ist der Vektor der Modelleingaben, f ist eine nichtlineare Funktion, die die Dynamik des Energiesystems darstellt, y ist der Vektor der Systemausgaben (Messungen) und g ist eine nichtlineare Funktion, die die Ausgangsfunktion (Messfunktion) darstellt. Im Falle eines linearen Modells können f und g ausgedrückt werden als

$$\dot{x} = Ax + Bu, \quad y = Cx + Du$$

Die Ausgabe dieses Schritts sind die Funktionen f und g , sowie der Vektor der Modelleingaben $u_k$ für k = 1 ..n.

Das Energiesystemmodell wird anschließend unter Verwendung des beschleunigten Simulationsverfahrens simuliert.

Die Simulationsergebnisse werden ausgewertet und bei Bedarf Steuermaßnahmen, wie z.B. Sollwertänderungen, durchgeführt, um den normalen Anlagenbetrieb aufrechtzuerhalten.

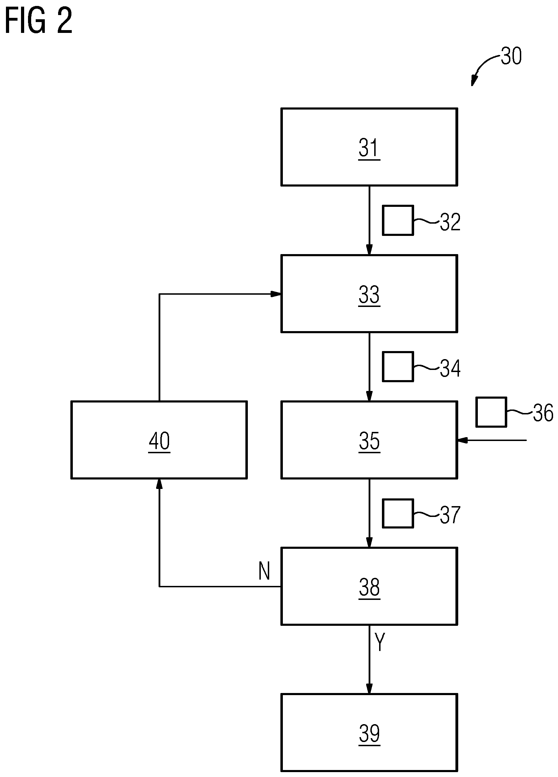

Die Figur 2 zeigt ein Beispiel eines erfindungsgemäßen Verfahrens, bei dem in Schritt 31 die Inputs für den Ansatz gesammelt werden. Dies umfasst:

- Die Definition der Systemdynamik f und Messungen g
- Den anfänglichen Systemzustandsvektor $x_0$. Der Ausgangszustandsvektor muss in einem separaten Schritt geschätzt werden, was im Stand der Technik bekannt ist (z.B. von der Website mathworks unter dem Link: https://de.mathworks.com/help/simulink/gui/initialstate. html).
- Die System Inputs über alle Schritte $u_{1...N}$.

Der Iterationsparameter k ist auf 1 festgelegt. Der Beschleunigungszustandsvektor des Modells $x_r$ und der Input $u_r$ wird auf einen Nullvektor gesetzt, der als 0 bezeichnet wird. $U_k$, f und g werden als Datenpaket 32 übergeben.

Im nächsten Schritt 33 werden f und g reduziert, um die Simulation zu beschleunigen. Es wird eine sog. "balanced truncation" von f und g als Funktion von $x_{k-1}$ ausgeführt.

Dieser Ansatz besteht aus den folgenden Teilschritten:

a. Wenn k 7 1 und $\|x_r - x_{k-1}\| < \Delta_x$ oder $\|u_r - u_{k-1}\| < \Delta_u$:

$$\text{Setze } f_k' = f_{k-1}', g_k' = g_{k-1}'$$

b. Andernfalls:

I. Linearisiere $f,g$ um $x_{k-1}$, um das linearisierte System $L_{k-1}$ zu erhalten.

$$\dot{x} = A_{k-1}x + B_{k-1}u, \quad y = C_{k-1}x + D_{k-1}u$$

II. Nutze $L_{k-1}$, um die Matrix $T_{b,k-1}$ zu berechnen, so dass die Transformation $x_b = T_{b,k-1}x$ eine balanzierte Realisierung des stabilen Anteils von $L_{k-1}$ ergibt. Beispielsweise derart, dass die Transformation $x_b = T_{b,k-1}x$ ein System $L_{b,k-1}$ ergibt, bei dem die gleiche Steuerbarkeits-Gram'sche-Matrix und Beobachtbarkeits-Gram'sche-Matrix vorliegen.

$$\dot{x}_b = T_{b,k-1}A_{k-1}T_{b,k-1}^{-1}x_b + T_{b,k-1}u, \quad y = C_{k-1}T_{b,k-1}^{-1}x_b + D_{k-1}u$$

Dieses Vorgehen ist bekannt von der Website mathworks (link: https://de.mathworks.com/help/control/ref/dynamicsy stem.balred.html)

III. Berechne die sog. "Hankel singular values" $g_i$, $i = 1 \dots N_s$, von $L_{b,k-1}$, wobei $N_s$ die Anzahl der Zustände in einem System gemäß o.g. Website angibt. Der größte Einzelwert wird mit G angegeben.

IV. Bestimmen der Zustände, die eleminiert ("trunkiert") werden können mit der Regel:

Wenn $g_i < \varepsilon G$, $i = 1 \dots N_s$, wobei $\varepsilon$ einen Schwellenwert angibt, z.B. 0.01, kann der i-te Zustand aus dem Originalsystem eliminiert werden.
Der Zustandsvektor wird in die Teile $x_{b,1}$, die behalten und weiter berechnet werden, und die abzubrechenden Teile $x_{b,2}$ aufgeteilt:

$$x_b = \begin{pmatrix} x_{b,1} \\ x_{b,2} \end{pmatrix}$$

Ferner wird die Matrix $\Gamma$ mit $x_{b,1} = \Gamma x_b$ definiert.

V. Es werden folgende Definitionen festgelegt:

$$f_k'(x_{b,1}, u) = \Gamma\, T_{b,k-1} f\left( T_{b,k-1}^{-1} \cdot (x_{b,1}^T \quad 0)^T, u \right)$$

$$g_k'(x_{b,1}, u) = g\left( T_{b,k-1}^{-1} \cdot (x_{b,1}^T \quad 0)^T, u \right)$$

VI. Es wird festgelegt: $x_r = x_{k-1}$ und $u_r = u_{k-1}$.

c. $f_k'$, $g_k'$ weisen reduzierte Dimensionen auf und werden mit einer Datenpaket 34 übergeben.

Im nächsten Schritt 35 wird das reduzierte Model mit aus der Literatur bekannten Ansätzen wie "trapozoidaler" oder "Runge-Kutta" Integration gelöst. Dabei dienen Inputs $u_k$ und Zeitpunkte $t_k$ Inputgrößen, die mit einem Datenpaket 36 bereitgestellt werden. Solche numerischen Verfahren sind beispielsweise auf der Website mathworks beschrieben (Link: https://de.mathworks.com/help/simulink/gui/solver.html) .
Es wird mit Datenpaket 37 das Ergebnis für den gerade berechneten Iterationsschritt ausgegeben.
Im Schritt 38 wird überprüft, ob k = n ist, d.h. ob der letzte Simulationsschritt erreicht wurde. Ist dies nicht der Fall (Pfeil "N"), so wird im Schritt 40 k um 1 erhöht und es wird der nächste Iterationsschritt mit Schritt 33 berechnet. Ist k = N (Pfeil "Y"), so wird der finale Schritt 39 erreicht und es werden die ausgewählten Messwerte $y_k$ und die Zeitpunkte $t_k$, $i = 1 \dots N$ ausgegeben.
Weitere Aspekte der erfindungsgemäßen Lösung beinhalten, dass der vorgeschlagene Algorithmus nur ausgeführt wird, wenn sich die Systemzustände oder Eingaben um einen Schwellenwert ändern, und nicht in jedem Iterationsschritt. Die Simulation kann parallelisiert werden, d.h. dass in jedem Schritt parallel zur Berechnung geprüft wird, ob dieser Schritt notwendig vollständig berechnet werden muss oder abgebrochen werden kann. Die vorgeschlagene Modellbeschleunigung kann auch auf Teile des Systemmodells angewendet werden, so dass nicht das gesamte Modell simuliert wird. Beispielsweise können ausschließlich die Stromnetzgleichungen für Kabel, Stromleitungen und Transformatoren betrachtet werden. Wenn das Modell linear ist (wie die Gleichungen zur Beschreibung des Energienetzes), kann die Modellbeschleunigung nur einmal zu Beginn der Simulation durchgeführt werden.

Der Ansatz kann auch offline angewendet werden (für verschiedenste Studien). Das Verfahren kann auch auf (dynamische Teile) von RMS-Modellen wie z.B. Generatoren angewendet werden.

Um die Vorteile des Ansatzes aufzuzeigen, wird der IEEE-Testfall 9 mit 45 Zuständen simuliert. Generatoren werden nicht simuliert, sondern nur die Netzelemente. Die Simulationsdauer beträgt 100 Sekunden. F
Für dieses Beispiel werden alle Busspannungen und Stromeinspeisungen als Messungen (Ausgänge bzw. Ergebnisse) ausgewählt. Dies ist der Worst Case für die Modellreduktion, da eine geringe Anzahl von Messungen schnellere Simulationszeiten ermöglicht.

Im Ergebnis zeigt sich, dass die erfindungsgemäße Simulation nur etwa ein Drittel der Rechenzeit benötigt hat.

| Simulationstyp | Originale Simulationszeit (s) | Erfindungsgemäße Simulationszeit (s) |
| --- | --- | --- |
| steady state simulation | 123.8 | 39 |
| simulation with load step | 156.436 | 53 |

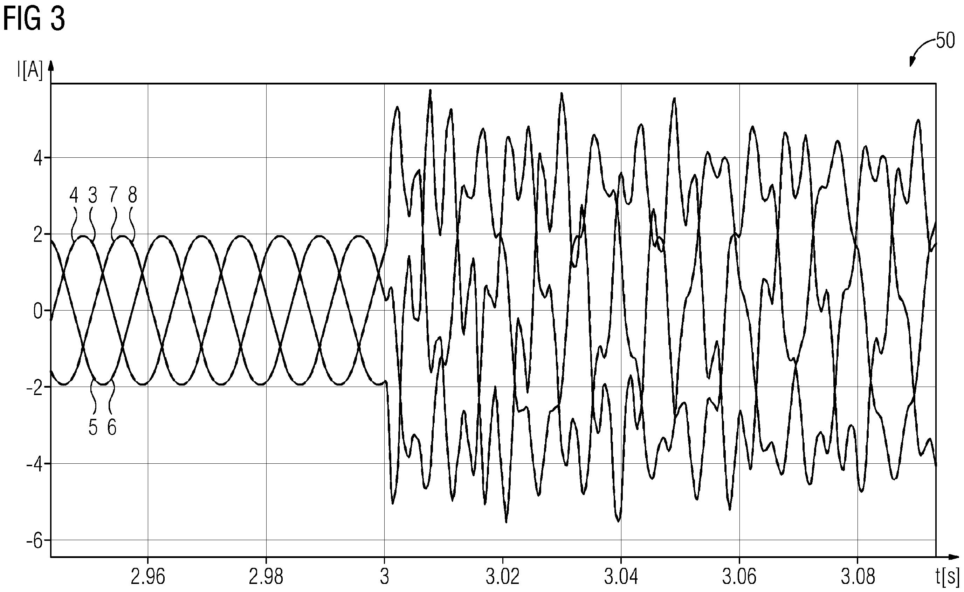

Dabei ergibt sich trotz dieser enormen Zeiteinsparungen praktisch das gleiche Ergebnis wie bei einer herkömmlichen Simulation. Dies zeigt auch die Figur 3, die ein Beispiel für ein Ergebnis einer erfindungsgemäßen EMT-Simulation angibt. Es werden drei Stromverläufe 4,5,7 bei einer Injektion eines Stromes bei ca. 3 Sekunden angegeben, die mit einem herkömmlichen EMT-Verfahren ermittelt wurden. Davon praktisch ununterscheidbar, d.h. den Stromverläufen 4,5,7 überlagert, sind die mit dem erfindungsgemäßen, vereinfachten EMT-Verfahren ermittelten Stromverläufe 3,8,6 angegeben.

## Patentansprüche

1. Computerimplementiertes Verfahren (30) für eine Bestimmung einer Netzstabilität eines elektrischen Energienetzes (13), **gekennzeichnet durch** die Schritte:

   Empfangen (17) eines Datensatzes (4,5) mit Parametern für Bestandteile (7,8,9,10,11,12) eines elektrischen Energienetzes (6) mittels einer Kommunikationseinrichtung, und
   Erzeugen (31) eines electromagnetic transient Modells anhand der Parameter mittels einer Modellerzeugungseinrichtung, **gekennzeichnet durch** die Schritte:

   Durchführen (23) einer Simulation anhand des Modells mittels einer Simulationseinrichtung, wobei eine Modellreduktion durchgeführt wird, indem Zustände, deren Einfluss auf das Simulationsergebnis unterhalb eines ersten Einflussschwellenwertes liegt und/oder Zustände, die durch eine Veränderung der Parameter weniger als ein zweiter Einflussschwellenwert beeinflusst sind, nicht vollständig berechnet werden.

2. Computerimplementiertes Verfahren nach Anspruch 1, **dadurch gekennzeichnet, dass** für die Modellreduktion Modellreduktion die Steuerbarkeits-Gram'sche-Matrix und/oder die Beobachtbarkeits-Gram'sche-Matrix berücksichtigt werden.

3. Computerimplementiertes Verfahren nach Anspruch 1 oder 2, **dadurch gekennzeichnet, dass** für die Modellreduktion Hankel-Singularwerte berücksichtigt werden.

4. Computerimplementiertes Verfahren nach einem der vorhergehenden Ansprüche, **dadurch gekennzeichnet, dass** für jeden Simulationsschritt die Modellreduktion gleichzeitig mit der Simulation begonnen wird, wobei die Simulation für den jeweiligen Simulationsschritt abgebrochen wird, sobald ein Zustand als nicht vollständig zu berechnen erkannt wird.

5. Computerimplementiertes Verfahren nach einem der vorhergehenden Ansprüche, **dadurch gekennzeichnet, dass** für die Bestandteile mindestens eines der folgenden Bestandteile verwendet wird: Leitung (6), Kabel, Transformator, Schalteinrichtung, Generator (9,11,12), Last (7,8,10), flexible alternating current transmission system (FACTS).

6. Computerimplementiertes Verfahren nach einem der vorhergehenden Ansprüche, **dadurch gekennzeichnet, dass** das Ergebnis der Simulation mittels einer Stabilitätseinrichtung für eine Stabilitätsanalyse (25) des Energienetzes verwendet wird.

7. Computerimplementiertes Verfahren nach Anspruch 6, **dadurch gekennzeichnet, dass** anhand der Stabilitätsanalyse (25) mittels einer Netzleiteinrichtung Gegenmaßnahmen für eine Stabilisierung des Netzzustands ermittelt und als Steuerbefehle (15,16) an steuerbare Betriebsmittel im Energienetz übermittelt werden.

8. Anordnung für eine Bestimmung einer Netzstabilität eines elektrischen Energienetzes (13), aufweisend:

eine Kommunikationseinrichtung zum Empfangen (17) eines Datensatzes (4,5) mit Parametern für Bestandteile (7,8,9,10,11,12) eines elektrischen Energienetzes (6), und eine Modellerzeugungseinrichtung zum Erzeugen (31) eines electromagnetic transient Modells anhand der Parameter,
**dadurch gekennzeichnet, dass**
eine Simulationseinrichtung ausgebildet ist, anhand des Modells eine Simulation durchzuführen (23), wobei eine Modellreduktion durchgeführt wird, indem Zustände, deren Einfluss auf das Simulationsergebnis unterhalb eines ersten Einflussschwellenwertes liegt und/oder Zustände, die durch eine Veränderung der Parameter weniger als ein zweiter Einflussschwellenwert beeinflusst sind, nicht vollständig berechnet werden.

9. Anordnung nach Anspruch 8, **dadurch gekennzeichnet, dass** die Simulationseinrichtung ausgebildet ist, für die Modellreduktion Modellreduktion die Steuerbarkeits-Gram'sche-Matrix und/oder die Beobachtbarkeits-Gram'sche-Matrix zu berücksichtigen.

10. Anordnung nach Anspruch 8 oder 9, **dadurch gekennzeichnet, dass** die Simulationseinrichtung ausgebildet ist, für die Modellreduktion Hankel-Singularwerte zu berücksichtigen.

11. Anordnung nach einem der Ansprüche 8 bis 10, **dadurch gekennzeichnet, dass** die Simulationseinrichtung ausgebildet ist, für jeden Simulationsschritt die Modellreduktion gleichzeitig mit der Simulation zu beginnen, wobei die Simulation für den jeweiligen Simulationsschritt abgebrochen wird, sobald ein Zustand als nicht vollständig zu berechnen erkannt wird.

12. Anordnung nach einem der Ansprüche 8 bis 11, **dadurch gekennzeichnet, dass** die Modellerzeugungseinrichtung ausgebildet ist, für die Bestandteile mindestens eines der folgenden Bestandteile zu verwenden: Leitung (6), Kabel, Transformator, Schalteinrichtung, Generator (9,11,12), Last (7,8,10), flexible alternating current transmission system (FACTS).

13. Anordnung nach einem der Ansprüche 8 bis 12, **dadurch gekennzeichnet, dass** die Simulationseinrichtung ausgebildet ist, das Ergebnis der Simulation mittels einer Stabilitätseinrichtung für eine Stabilitätsanalyse (25) des Energienetzes zu verwenden.

14. Anordnung nach Anspruch 13, **dadurch gekennzeichnet, dass** eine Netzleiteinrichtung ausgebildet ist, anhand der Stabilitätsanalyse (25) Gegenmaßnahmen für eine Stabilisierung des Netzzustands zu ermitteln und als Steuerbefehle (15,16) an steuerbare Betriebsmittel im Energienetz zu übermitteln.

15. Computerprogrammprodukt, umfassend Befehle, die bei der Ausführung des Programms durch einen Computer diesen veranlassen, das Verfahren nach einem der Ansprüche 1 bis 7 auszuführen.

FIG 1

EP 4 456 364 A1

FIG 2

FIG 3

# EUROPÄISCHER RECHERCHENBERICHT

Europäisches Patentamt
European Patent Office
Office européen des brevets

**Nummer der Anmeldung**

EP 23 17 0662

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | RUIZ-ZEA CARLOS A ET AL: "Dual-Band Reduced-Order Model of an HVDC Link Embedded Into a Power Network for EMT Studies", IEEE TRANSACTIONS ON ENERGY CONVERSION, IEEE SERVICE CENTER, PISCATAWAY, NJ, US, Bd. 35, Nr. 1, 19. August 2019 (2019-08-19), Seiten 416-424, XP011772568, ISSN: 0885-8969, DOI: 10.1109/TEC.2019.2935892 [gefunden am 2020-02-18] * Seite 416 - Seite 423 * ----- | 1-15 | INV. H02J3/00 |
| A | ISHCHENKO A ET AL: "Dynamic equivalencing of distribution networks with dispersed generation using Hankel norm approximation", 20070913, Bd. 1, Nr. 5, 13. September 2007 (2007-09-13), Seiten 818-825, XP006029319, * Seite 818 - Seite 823 * ----- | 1-15 | |
| A | RAMIREZ ABNER ET AL: "Application of Balanced Realizations for Model-Order Reduction of Dynamic Power System Equivalents", IEEE TRANSACTIONS ON POWER DELIVERY, IEEE SERVICE CENTER, NEW YORK, NY, US, Bd. 31, Nr. 5, 1. Oktober 2016 (2016-10-01), Seiten 2304-2312, XP011623676, ISSN: 0885-8977, DOI: 10.1109/TPWRD.2015.2496498 [gefunden am 2016-09-21] * Seite 2305 - Seite 2307 * ----- -/-- | 1-15 | **RECHERCHIERTE SACHGEBIETE (IPC)**<br><br>H02J |

Der vorliegende Recherchenbericht wurde für alle Patentansprüche erstellt

| Recherchenort | Abschlußdatum der Recherche | Prüfer |
|---|---|---|
| München | 13. Oktober 2023 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**Seite 1 von 2**

**EP 4 456 364 A1**

Europäisches
Patentamt

European
Patent Office

Office européen
des brevets

# EUROPÄISCHER RECHERCHENBERICHT

Nummer der Anmeldung

**EP 23 17 0662**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2015 208466 A1 (SIEMENS AG [DE]) 10. November 2016 (2016-11-10) * Absatz [0009] – Absatz [0037]; Abbildungen 1,2 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 13. Oktober 2023 | Krasser, Bernhard |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**Seite 2 von 2**

**ANHANG ZUM EUROPÄISCHEN RECHERCHENBERICHT
ÜBER DIE EUROPÄISCHE PATENTANMELDUNG NR.**

EP 23 17 0662

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2023

| Im Recherchenbericht angeführtes Patentdokument | Datum der Veröffentlichung | Mitglied(er) der Patentfamilie | Datum der Veröffentlichung |
|---|---|---|---|
| DE 102015208466 A1 | 10-11-2016 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Intelligent control center technology - Spectrum Power. Siemens AG, 2017
- Spectrum Power Aktives Netzwerkmangement. Siemens AG, 2016
- **DZAFIC et al.** Real-Time Distribution System State Estimation. *IEEE 978-1-4244-7398-4,* 2010
- **DZAFIC et al.** Real-Time Estimation of Loads in Radial and Unsymmetrical Three-Phase Distribution Networks. *IEE 0885-8950,* 2013
- Dynamic Simulation PSS®E. 2014
- **MARKOVIC et al.** Understanding Small-Signal Stability of Low-Inertia Systems. *IEEE Transactions on Power Systems,* September 2021, vol. 36 (5
- Essentials of robust control. **KEMIN ; JOHN COMSTOCK DOYLE.** dem Theorem 7.11. Prentice hall, 1998, vol. 104